# EUROPÄISCHE PATENTANMELDUNG

(11) **EP 4 671 192 A1**
(43) Veröffentlichungstag der Anmeldung: **31.12.2025**
(21) Anmeldenummer: 24183894.5
(22) Anmeldetag: 24.06.2024
(51) Int. Cl.: B66F 11/04

(54) **FERTIGUNGSANLAGE**

(71) Anmelder: OTech GmbH, 77855 Achern-Grossweier (DE)
(72) Erfinder: Lukens, Steibli, 76646 Bruchsal (DE)
(74) Vertreter: Mertzlufft-Paufler, Cornelius

(57) **Zusammenfassung**

Die Erfindung beschreibt eine Fertigungsanlage (1) für Produkte (2), insbesondere für Fahrzeuge, mit wenigstens einem Montagesteg (3), der entlang einer Fertigungslinie (4) angeordnet ist, wobei zu fertigende Produkte (2) entlang der Fertigungslinie (4) bewegbar sind. Die Fertigungsanlage (1) weist wenigstens eine Montagebrücke (7) auf, die eine Montageplattform (15) aufweist, die zwischen wenigstens einer ersten vertikalen Position (P1) und einer zweiten, unterschiedlichen vertikalen Position (P2) bewegbar ist. Die Montageplattform (15) liegt in der ersten vertikalen Position (P1) auf Höhe des Montagestegs (3) und grenzt an den

## Beschreibung

Die Erfindung betrifft eine Fertigungsanlage für Produkte, insbesondere für Fahrzeuge, mit wenigstens einem Montagesteg, der entlang einer Fertigungslinie angeordnet ist.

Solche Fertigungsanlagen sind vielfach bekannt und werden etwa dazu eingesetzt, einzelne Fertigungsschritte an den Produkten durchzuführen. In der Regel werden die Produkte entlang der Fertigungslinie bewegt, so dass die Produkte verschiedene Stationen entlang des Montagestegs durchlaufen können. Die Monteure können auf dem Montagesteg die einzelnen Fertigungsschritte durchführen. In der Regel befindet sich der Montagesteg auf einer gegenüber dem Boden erhöhten vertikalen Position, so dass etwa auch Arbeiten in größerer Höhe an dem Produkt durchgeführt werden können.

Beispielhaft kann ein Produkt etwa ein Fahrzeug oder Fahrzeuganhänger sein, beim dem entlang der Fertigungslinie etwa Arbeiten am Fahrzeugdach durchgeführt werden sollen.

Vor allem bei Fahrzeugen ergibt sich oft die Notwendigkeit nicht nur seitlich an dem Fahrzeug Arbeiten durchzuführen, sondern auch an der Front oder dem Heck zu denen von dem seitlichen Montagesteg kein Zugang besteht. Die Erfindung hat sich daher die Aufgabe gestellt, den Zugang zu dem zu fertigenden Produkt zu verbessern.

Diese Aufgabe wird erfindungsgemäß durch eine Fertigungsanlage mit den Merkmalen des Anspruch 1 gelöst.

Die erfindungsgemäße Fertigungsanlage ist dadurch gekennzeichnet, dass sie wenigstens eine Montagebrücke aufweist, dass die Montagebrücke eine Montageplattform aufweist, die zwischen wenigstens einer ersten vertikalen Position und einer zweiten, unterschiedlichen vertikalen Position bewegbar ist, und dass die Montageplattform in der ersten vertikalen Position auf Höhe des Montagestegs liegt und an den Montagesteg angrenzt.

Die Montageplattform kann beispielsweise an einer bestimmten Station der Fertigungsanlage angeordnet sein. Sobald das zu fertigende Produkt an dieser Station angekommen ist, kann die Montageplattform in die erste vertikale Position bewegt werden. Somit besteht Zugang von dem Montagesteg auf die Montageplattform und damit Zugang zu einer Produktfront oder einem Produktheck.

Die Montageplattform kann dazu etwa quer oder rechtwinklig zum Montagesteg ausgerichtet sein.

Eine zweite vertikale Position der Montageplattform kann etwa hoch über der Fertigungslinie sein, so dass zu fertigende Produkt unter der Montageplattform hindurch entlang der Fertigungslinie bewegbar ist. Es wäre jedoch auch denkbar, dass die zweite vertikale Position tiefer als die erste vertikale Position liegt.

Die Montagebrücke kann an einer fest definierten Station, also einer fixen Position entlang des Montagestegs angeordnet sein. Ein Produkt kann dabei zu dieser Position entlang der Fertigungslinie bewegt werden und, wie oben beschrieben, die Montageplattform aus der zweiten in die erste vertikale Position abgesenkt werden. Dabei ist es jedoch notwendig, das Produkt an der Station anzuhalten.

In einer vorteilhaften Ausführung ist die Montagebrücke entlang der Fertigungslinie bewegbar ausgebildet. Dadurch kann die Montagebrücke an verschiedenen Stationen oder Positionen der Fertigungslinie eingesetzt werden, wodurch die Fertigung flexibler wird. Sofern sich die Montageplattform in der zweiten vertikalen Position befindet, kann sie über Produkte in der Fertigungslinie hinwegbewegt werden und an der benötigten Position der Fertigungslinie abgesenkt werden, etwa auf die erste vertikale Position.

In einer noch vorteilhafteren Ausführung ist die Montagebrücke, zumindest wenn sich die Montageplattform in der ersten vertikalen Position befindet, mit einem zu fertigenden Produkt synchronisiert entlang der Fertigungslinie bewegbar. Auf diese Weise ist eine kontinuierliche Fertigung möglich. Das bedeutet, ein Produkt muss nicht an einer Station angehalten werden. Vielmehr wird die Montagebrücke so mit dem Produkt mitbewegt, dass eine kontinuierliche Arbeit an dem Produkt möglich ist.

In einer Ausführung weist die Fertigungsanlage wenigstens eine Krahnbahn auf, die parallel zu und oberhalb der Fertigungslinie angeordnet ist, an der die Montagebrücke aufgehängt ist. Diese Krahnbahn kann auf vielfältige Weise ausgebildet sein.

Die Krahnbahn kann dabei mittig über der Fertigungslinie oder seitlich etwa oberhalb des oder eines Montagestegs ausgerichtet sein.

Jedenfalls ist die Montagebrücke so an der Krahnbahn aufgehängt, dass sie entlang der Krahnbahn bewegbar ist. Hierzu können etwa Rollen oder Räder vorhanden sein oder eine Gleitlagerung. Die Aufhängung kann beispielsweise in der Art einer Laufkatze ausgebildet sein.

Auf diese Weise kann die Montagebrücke entlang der Fertigungslinie bewegt werden.

Die Montagebrücke kann manuell beweglich sein oder einen motorischen Antrieb besitzen. Der motorische Antrieb ist vorzugsweise durch einen Elektromotor gebildet, wodurch eine einfache und robuste Steuerung ermöglicht ist.

In einer Ausführung weist die Montagebrücke einen motorischen Antrieb zum Heben und Senken der Montageplattform auf. Dieser motorische Antrieb kann etwa elektromotorisch oder hydraulisch ausgebildet sein.

In einer Ausführung weist die Montagebrücke einen Ausleger auf, der an der Krahnbahn aufgehängt ist. Der Ausleger dient somit zur Aufhängung der Montagebrücke an der Krahnbahn.

Der Ausleger ist insbesondere vorteilhaft, wenn die Krahnbahn seitlich der Fertigungslinie ausgerichtet ist. In diesem Fall ist der Ausleger asymmetrisch ausgebildet und an einem Ende an der Krahnbahn aufgehängt. Auf diese Weise kann die Montageplattform dennoch im Wesentlichen mittig über der Fertigungslinie angeordnet sein.

In einer Ausführung ist ein motorischer Antrieb zum Bewegen der Montagebrücke entlang der Krahnbahn an der Montagebrücke, etwa dem Ausleger, angeordnet. Auf diese Weise ist ein einfacher Antrieb der Montagebrücke möglich.

In einer Ausführung ist die Montageplattform an dem Ausleger aufgehängt.

Dabei kann vorteilhafter Weise ein oder der motorische Antrieb zum Heben und Senken der Montageplattform an dem Ausleger angeordnet sein oder mit dem Ausleger zusammenwirken.

Neben dem asymmetrischen Ausleger sind andere Aufhängungen möglich und denkbar. Beispielsweise kann die Krahnbahn bereits mittig über der Fertigungslinie angeordnet sein, so dass anstelle des asymmetrischen Auslegers auch eine symmetrische Aufhängung, etwa in Form einer Laufkatze, ausgebildet sein kann. Es wäre auch denkbar, zwei voneinander beabstandete, parallele Krahnbahnen vorzusehen, wobei ein Ausleger jeweils eine Aufhängung für jede Krahnbahn aufweisen kann.

Neben diesen Aufhängungen sind zahlreiche weitere Ausführungen denkbar, die jedoch nicht alle einzeln aufgeführt werden können.

In einer vorteilhaften Ausführung weist die Fertigungsanlage zwei parallele Montagestege auf, wobei eine Fertigungslinie zwischen den beiden Montagestegen liegt und die Montagebrücke zwischen den Montagestegen angeordnet ist und in der ersten vertikalen Position an beide Montagestege angrenzt. Durch die beiden Montagestege ist ein beidseitiger Zugang zu einem zu fertigenden Produkt möglich. Die Montagebrücke verbindet die beiden Montagestege und ermöglicht so einen Übertritt zwischen den beiden Montagestegen. Dies vereinfacht und beschleunigt die Fertigung des Produkts.

In einer Ausführung weisen die Montagestege jeweils eine Führungsschiene auf, die Montageplattform weist jeweils Rollen auf, die in der ersten Position jeweils auf den Führungsschienen aufliegen. Auf diese Weise liegt die Last der Montageplattform in der ersten Position auf den Rollen und den Führungsschienen und nicht an einer Aufhängung. Auf diese Weise ist die Montageplattform in der ersten Position, also der Montage- und Einsatzposition stabil, belastbar und schwingungsfrei.

Durch die Rollen ist zudem eine zum Produkt synchronisierte Bewegung einfach durchführbar. Beispielsweise könnte die Montagebrücke mechanisch mit dem zu fertigenden Produkt verbunden werden, so dass die Montagebrücke praktisch durch das Produkt selbst, also die Fertigungslinie mitbewegt wird.

In einer alternativen Ausführung weist die Montagebrücke wenigstens einen motorischen Antrieb auf, der die Montagebrücke entlang der Führungsschienen antreibt.

Die synchronisierte Bewegung könnte über den motorischen Antrieb an einer Aufhängung an der Krahnbahn erfolgen.

In einer besonders bevorzugten Ausführung ist wenigstens ein zusätzlicher motorischer Antrieb an der Montageplattform angeordnet, der beispielsweise die Rollen gegenüber den Führungsschienen antreibt.

Alternativ kann der motorische Antrieb ein Reibrad aufweisen, das mit der Führungsschiene zusammenwirkt. Vorzugsweise ist ein solcher Reibradantrieb beidseitig an jeder Führungsschiene vorhanden.

Abgesehen davon sind zahleiche weitere Antriebe denkbar, die ebenfalls eine synchronisierte Bewegung ermögliche, so dass die Erfindung nicht auf die hier beschriebenen Antriebsarten eingeschränkt ist.

In einer Ausführung weist die Montagebrücke wenigstens eine Führung auf, die die Montageplattform beim Heben und Senken stabilisiert. Auf diese Weise werden Schwingungen der Montageplattform verhindert.

Eine solche Führung kann beispielsweise durch eine oder mehrere Teleskopführungen, etwa Teleskopzylinder, gebildet sein. Diese sind einfach aufgebaut und bieten eine gute Stabilisierung.

Zusätzlich kann die Führung einen oder mehrere Dämpfer aufweisen, der zusätzlich Schwingungen reduzieren kann.

In einer Ausführung weist der motorische Antrieb zum Heben und Senken der Montageplattform einen Seil- oder Kettenantrieb auf.

Alternativ könnte auch wenigstens ein Hydraulikzylinder, insbesondere hydraulischer Teleskopzylinder, vorhanden sein, der gleichzeitig als Führung dienen kann.

In einer Ausführung weist die Montagebrücke einen Abstandssensor auf, mit dem ein Abstand zwischen der Montageplattform und einem Produkt bestimmbar ist, wodurch eine synchrone Bewegung der Montagebrücke zu dem Produkt erzielbar ist. Auf diese Weise kann ein motorischer Antrieb der Montageplattform so angesteuert werden, dass die Montageplattform sich synchron, also mit möglichst konstantem Abstand, zu dem Produkt bewegt.

In einer Ausführung weist die Fertigungsanlage wenigstens zwei separat steuerbare Montagebrücken auf. Auf diese Weise ist es vorteilhaft möglich, entlang der Fertigungslinie jeweils vor und hinter einem Produkt eine Montagebrücke zu positionieren. Somit ist, vor allem in Zusammenhang mit zwei Montagestegen, ein Produkt rundum zugänglich, so dass eine Fertigung vereinfacht ist.

Die Erfindung ist nachfolgend anhand eines Ausführungsbeispiels mit Bezug auf die beiliegenden Zeichnungen näher erläutert.

Es zeigt:
- Fig. 1: eine Schrägansicht einer Ausführung einer Fertigungsanlage,
- Fig. 2: einen Ausschnitt der Fertigungsanlage der Fig. 1,
- Fig. 3: eine Ansicht der Fig. 2 mit teilweise ausgeblendeten Merkmalen,
- Fig. 4: eine Schrägansicht einer Montagebrücke der Fig. 2 mit der Montagebrücke in der ersten vertikalen Position,
- Fig. 5: die Montagebrücke der Fig. 4 in der zweiten vertikalen Position,
- Fig. 6: eine Unteransicht der Montageplattform mit einer Detaildarstellung des motorischen Antriebs.

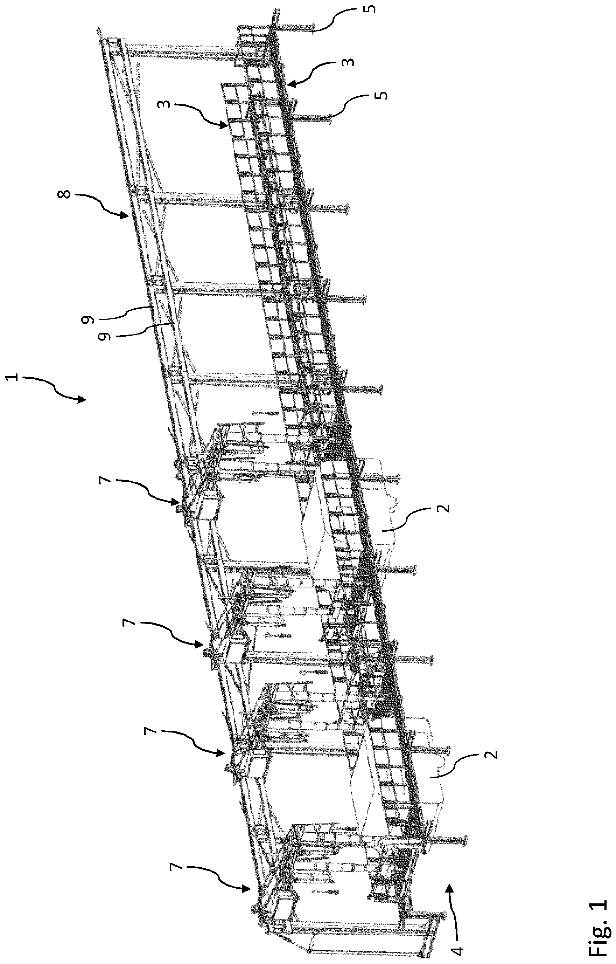

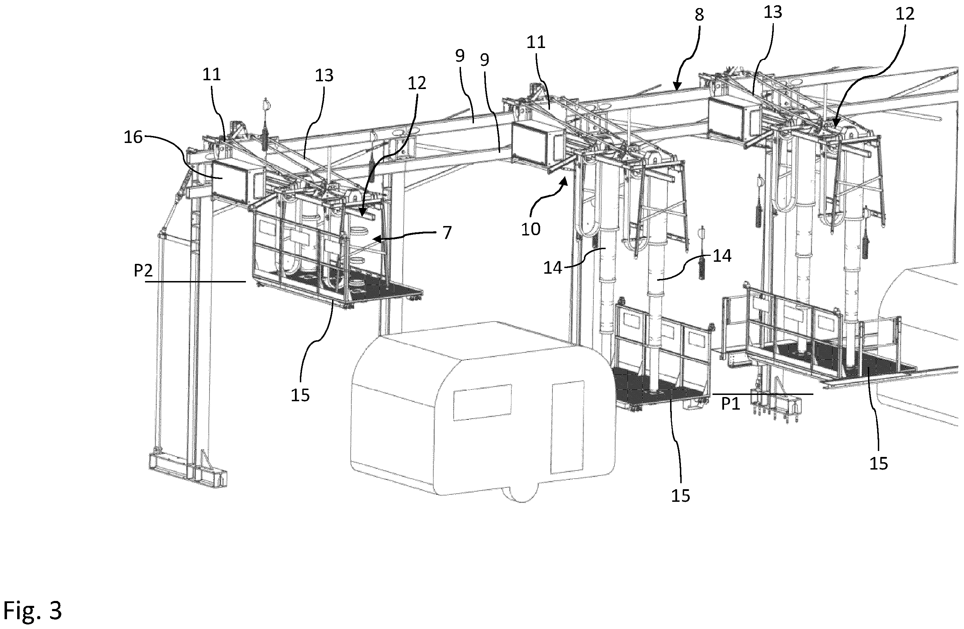

Die Figuren 1 bis 3 zeigen eine Schrägansicht einer im Ganzen mit 1 bezeichneten Fertigungsanlage gemäß einer Ausführung der Erfindung. Im Beispiel sind symbolisch als zu fertigende Produkte 2 zwei Wohnanhänger, also Caravans, gezeigt. Diese befinden sich an verschiedenen Positionen innerhalb der Fertigungsanlage 1.

Die gezeigte Fertigungsanlage 1 besitzt zwei parallele Montagestege 3, zwischen denen eine Fertigungslinie 4 definiert und gebildet ist. Die Montagestege 2 sitzen auf Stelzen 5, so dass die Montagestege 3 über einem Hallenboden (nicht gezeigt), etwa einer Fertigungshalle, stehen. Die Stelzen 5 sind im Beispiel so lange ausgebildet, dass die Montagestege 3 etwa auf der halben Höhe der zu fertigenden Produkte 2 liegen. Auf diese Weise ist es einfach möglich, Arbeiten etwa am Dach der Produkte 2 durchzuführen. Die Höhe der Stelzen 5 oder der Montagestege 3 spielt für die Erfindung jedoch keine Rolle. Vorzugsweise besitzen die beiden Montagestege 3 jedoch dieselbe Höhe.

Die Fertigungsanlage 1 besitzt eine, hier nicht gezeigte, Transportvorrichtung zum Transport von Produkten entlang der Fertigungslinie 4. Die Art der Transportvorrichtung und überhaupt das Vorhandensein einer Transportvorrichtung spielt für die Erfindung keine Rolle. Vielmehr ist die Erfindung auch ohne Transportvorrichtung verwendbar.

Die gezeigte Ausführung der Fertigungsanlage 1 besitzt vier Montagebrücken 7. Die Montagebrücken 7 sind so innerhalb der Fertigungsanlage 1 positioniert dargestellt, dass jeweils vor und hinter einem Produkt 2 eine Montagebrücke 7 liegt. Auf diese Weise ist das Produkt 2 rundum zugänglich.

Die Fertigungsanlage 1 weist weiter eine Krahnbahn 8 auf, die parallel zu und vertikal über einem der beiden Montagestege 3 angeordnet ist. Die Krahnbahn 8 weist vorzugsweise zwei parallele und vertikal voneinander beabstandete Krahnschienen 9 auf.

Jede Montagebrücke 7 weist einen asymmetrisch ausgebildeten Ausleger 10 auf, der einseitig an der Krahnbahn 8, speziell an den beiden Krahnschienen 9 aufgehängt ist. Der Ausleger 10 weist dazu eine Schienenführung 11 auf, die nicht näher gezeigt ist. Vorzugsweise weist die Schienenführung 11 jedoch mehrere Rollen und/oder Räder auf, die an den Krahnschienen 9 angreifen. Die Krahnbahn 8 kann dabei auch eine andere Ausgestaltung aufweisen, beispielsweise nur eine Schiene besitzen, oder zwei horizontal beabstandete Schienen aufweisen.

Der Ausleger 10 weist einen Auslegerarm 12 auf, der an einem Ende direkt mit der Schienenführung 11 verbunden ist. Das andere Ende des Auslegerarms 12 ist über Querstreben 13 ebenfalls mit der Schienenführung 11 verbunden.

An dem Auslegerarm 12 sind zwei Teleskopführungen 14 befestigt, die quer zur Krahnbahn 8 auf einer Geraden liegen und voneinander beabstandet angeordnet sind. An den anderen Enden der Teleskopführungen 14 ist eine Montageplattform 15 befestigt.

Die Montagplattform 15 ist zusätzlich über einen Seil- oder Kettenantrieb mit dem Auslegerarm 12 verbunden, so dass die Montageplattform 15 vertikal zwischen wenigsten einer ersten vertikalen Position P1 und einer zweiten vertikalen Position P2 beweglich ist. Prinzipiell ist die Montageplattform 15 stufenlos vertikal beweglich. Der nicht gezeigte Seilantrieb kann beispielsweise innerhalb einer der Teleskopführungen 14 angeordnet sein, wodurch er vorteilhaft vor Berührung geschützt ist.

Zur Bewegung der Montagebrücke 15 entlang der Krahnbahn 8 weist die Montagebrücke 7 einen motorischen Antrieb 16, etwa einen Elektromotor, auf, der in geeigneter Weise auf die Krahnschienen 9 wirkt. Etwa indem ein Rad oder eine Rolle motorisch angetrieben ist oder ein zusätzliches Reibrad vorhanden ist.

Jedenfalls sind die einzelnen Montagebrücken 7 dadurch unabhängig voneinander separat entlang der Krahnbahn 8 bewegbar.

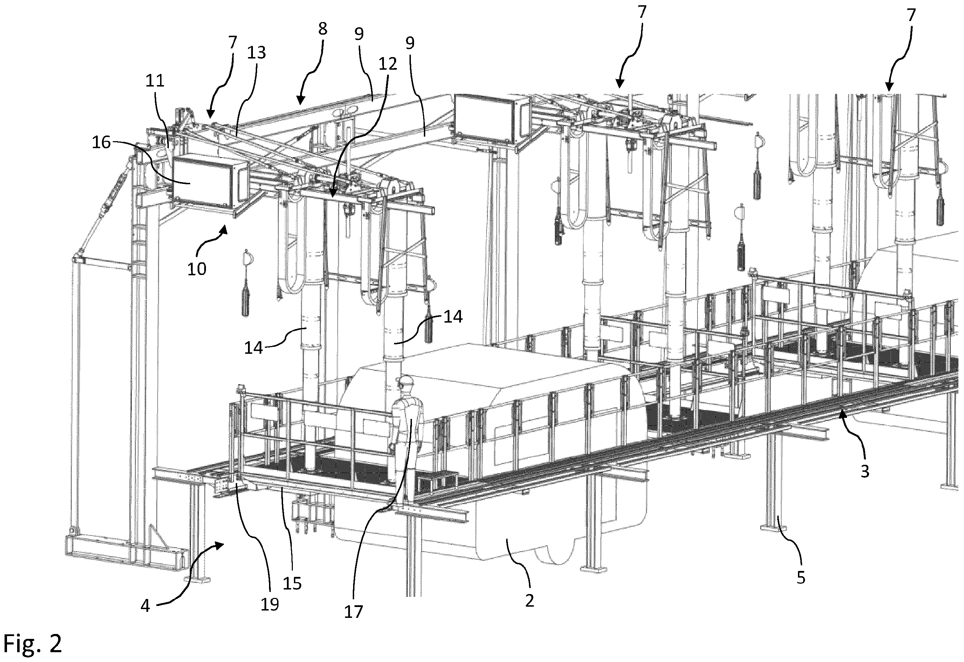

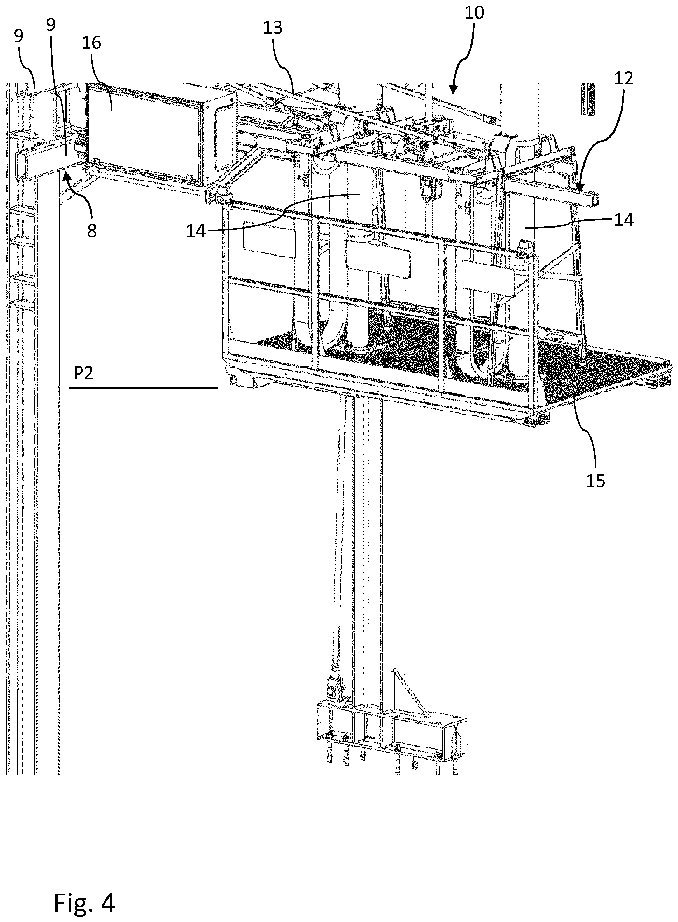

Die Fig. 4 zeigt ausschnittsweise eine Montagebrücke 7 der Fig. 2 in einer zweiten vertikalen Position P2. In dieser zweiten vertikalen Position P2 ist die Montageplattform 15 vollständig angehoben, das bedeutet so weit wie möglich zum Ausleger 10 gezogen. Auf diese Weise ist die Montageplattform 15 höher als zu fertigende Produkt 2, so dass eine Bewegung der Montagebrücke 7 entlang der Krahnbahn 8 ermöglicht ist.

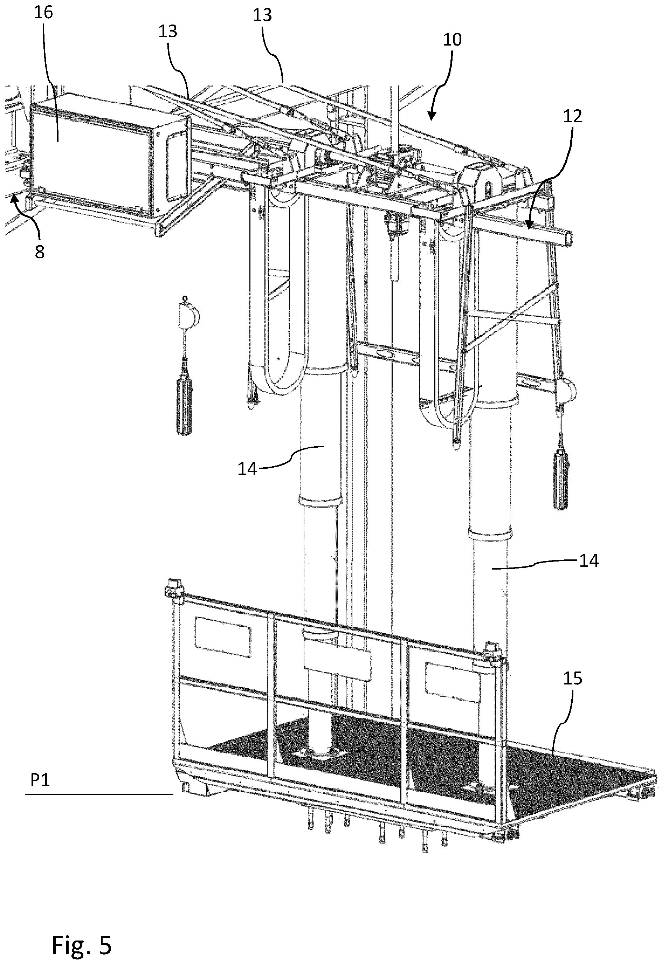

Die Fig. 5 zeigt ausschnittsweise eine Montagebrücke 7 der Fig. 2 in einer ersten vertikalen Position P1. In dieser ersten vertikalen Position P1 liegt die Montageplattform bündig auf der vertikalen Höhe der Montagestege 3. Die Montageplattform 15 liegt dabei so zwischen den beiden Montagestegen 3, dass sie diese verbindet.

In der ersten vertikalen Position P1 ist die Montageplattform 15 durch eine Person 17 (Fig. 2) begehbar.

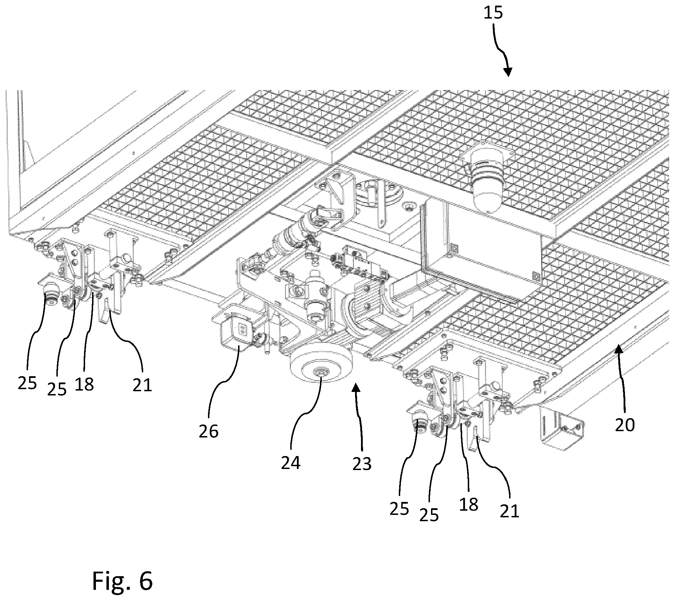

Die Fig. 6 zeigt einen Ausschnitt einer Unterseite 20 einer Montageplattform 15. Zur Erhöhung der Stabilität und der Tragkraft der Montageplattform 15, weist diese an ihrer Unterseite 20 Rollen 18 oder Räder auf, die in der ersten vertikalen Position P1 auf Führungsschienen 19 entlang der Montagestege 3 aufliegen. Die Last der Montageplattform 15 liegt somit vollständig auf den Führungsschienen 19 und hängt nicht allein an den Teleskopführungen 14.

Zusätzlich zu den Rollen 18 besitzt die Montageplattform 15 an der Unterseite 20 wenigstens eine Führungsnut 21, in die, in der ersten vertikalen Position P1, eine Führungskante (nicht gezeigt) eingreift, die entlang der Führungsschiene 19 liegt. Die Schiene kann dabei L- oder U-förmig ausgebildet sein, so dass die Führungskante ein Teil der Führungsschiene 19 sein kann. Diese Führungskante verhindert ein Schwingen oder eine Bewegung quer zu den Montagestegen 3, etwa wenn eine Person 17 die Montageplattform 15 betritt oder verlässt.

Die Montageplattform 15 weist zudem an der Unterseite wenigstens einen Reibradantrieb 23 auf. Das Reibrad 24 des Reibradantriebs 23 wirkt mit der Schiene 21, etwa einer Führungskante, oder dem Montagesteg 3 zusammen. Durch den Reibradantrieb 23 ist die Montageplattform 15 gegenüber der Führungsschiene 19 motorisch antreibbar. Das bedeutet, dass in der ersten vertikalen Position P1, die Bewegung der Montagebrücke 7 entlang der Fertigungslinie 4 alternativ und/oder zusätzlich über den Reibradantrieb 23 der Montageplattform 15 erfolgen kann.

Vorzugsweise erfolgt der Antrieb in der ersten vertikalen Position P1 ausschließlich über den Reibradantrieb 23. Zweckmäßigerweise besitzt die Montageplattform 15 an beiden mit der Schiene 19 wirkenden Seiten jeweils einen Reibradantrieb 23, wodurch ein Verkanten der Montageplattform zwischen den Montagestegen 3 verhindert werden kann.

Die Montageplattform 15 im Beispiel weist weitere Führungsrollen 25 auf, die für eine genaue Ausrichtung der Montageplattform 15 in Bezug auf die Führungsschienen 19 sorgen und somit eine reibungsarme und genaue Bewegung der Montagebrücke 7 ermöglichen.

Zweckmäßigerweise besitzt die Montageplattform 15 einen (nicht gezeigten) Abstandssensor, der einen Abstand zu einem Produkt entlang der Fertigungslinie 4 bestimmen kann. Der Reibradantrieb 23 kann dann so angesteuert werden, dass ein Abstand zu einem Produkt 2 konstant gehalten wird. Auf diese Weise ist eine synchronisierte Bewegung der Montageplattform 15 zur Transportbewegung des Produkts 2 einfach realisierbar. Dadurch kann ein zu fertigendes Produkt 2 auch bei abgesenkter Montageplattform 15 weiter entlang der Fertigungslinie 4 transportiert werden, um so einen Fertigungstakt beizubehalten.

Weiter weist die Montageplattform 15 im Beispiel einen Positionssensor auf, über den feststellbar ist, ob die Montageplattform 15 eine Endlage, etwa die erste vertikale Position P1 und/oder die zweite vertikale Position P2 erreicht hat.

Die gezeigten Ausführungsbeispiel dienen zur Verdeutlichung der Erfindung. Einzelne Elemente der gezeigten Ausführung können ohne Änderung der erfinderischen Idee geändert oder durch andere Elemente ersetzt werden. Demnach sollen die gezeigten Ausführungen in keiner Weise einschränkend verstanden werden.

### Bezugszeichenliste

- 1: Fertigungsanlage
- 2: Produkte
- 3: Montagestege
- 4: Fertigungslinie
- 5: Stelzen
- 7: Montagebrücke
- 8: Krahnbahn
- 9: Krahnschienen
- 10: Ausleger
- 11: Schienenführung
- 12: Auslegerarm
- 13: Querstreben
- 14: Teleskopführung
- 15: Montageplattform
- 16: motorischer Antrieb
- 17: Person
- 18: Rollen
- 19: Führungsschiene
- 20: Unterseite der Montageplattform
- 21: Führungsnut
- 23: Reibradantrieb
- 24: Reibrad
- 25: Führungsrollen
- 26: Positionssensor
- P1: erste vertikale Position
- P2: zweite vertikale Position

## Patentansprüche

1. Fertigungsanlage (1) für Produkte (2), insbesondere für Fahrzeuge, mit wenigstens einem Montagesteg (3), der entlang einer Fertigungslinie (4) angeordnet ist, wobei zu fertigende Produkte (2) entlang der Fertigungslinie (4) bewegbar sind, **dadurch gekennzeichnet,**
**dass** die Fertigungsanlage (1) wenigstens eine Montagebrücke (7) aufweist, dass die Montagebrücke (7) eine Montageplattform (15) aufweist, die zwischen wenigstens einer ersten vertikalen Position (P1) und einer zweiten, unterschiedlichen vertikalen Position (P2) bewegbar ist,
und **dass** die Montageplattform (15) in der ersten vertikalen Position (P1) auf Höhe des Montagestegs (3) liegt und an den Montagesteg (3) angrenzt.

2. Fertigungsanlage (1) nach Anspruch 1, **dadurch gekennzeichnet, dass** die Montagebrücke (7) entlang der Fertigungslinie (4) bewegbar ist und/oder dass die Montagebrücke (7), zumindest wenn sich die Montageplattform (15) in der ersten vertikalen Position (P1) befindet, mit einem zu fertigenden Produkt (2) synchronisiert entlang der Fertigungslinie (4) bewegbar ist.

3. Fertigungsanlage (1) nach Anspruch 1 oder 2, **dadurch gekennzeichnet, dass** die Fertigungsanlage (1) wenigstens eine Krahnbahn (8) aufweist, die parallel zu und oberhalb der Fertigungslinie (4) angeordnet ist, und an der die Montagebrücke (7) aufgehängt ist, und/oder dass die Montagebrücke (7) einen motorischen Antrieb zum Heben und Senken der Montageplattform (15) aufweist.

4. Fertigungsanlage (1) nach Anspruch 3, **dadurch gekennzeichnet, dass** die Montagebrücke (7) einen Ausleger (10) aufweist, der an der Krahnbahn (8) aufgehängt ist, insbesondere wobei ein motorischer Antrieb (16) zum Bewegen der Montagebrücke (7) entlang der Krahnbahn (8) an dem Ausleger (10) angeordnet ist und/oder dass die Montageplattform (15) an dem Ausleger (10) aufgehängt ist, insbesondere wobei ein oder der motorische Antrieb zum Heben und Senken der Montageplattform (15) an dem Ausleger (10) angeordnet ist.

5. Fertigungsanlage (1) nach einem der vorangehenden Ansprüche, **dadurch gekennzeichnet, dass** die Fertigungsanlage (1) zwei parallele Montagestege (3) aufweist, wobei die Fertigungslinie (4) zwischen den beiden Montagestegen (3) liegt und die Montageplattform (15) zwischen den Montagestegen (3) angeordnet ist und in der ersten vertikalen Position an beide Montagestege (3) angrenzt.

6. Fertigungsanlage (1) nach Anspruch 5, **dadurch gekennzeichnet, dass** die Montagestege (3) jeweils eine Führungsschiene (19) aufweisen, dass die Montageplattform (15) jeweils Rollen (18) aufweisen, die in der ersten vertikalen Position (P1) jeweils auf den Führungsschienen (19) aufliegen.

7. Fertigungsanlage (1) nach einem der vorangehenden Ansprüche, dass die Montageplattform (15) wenigstens einen motorischen Antrieb (23) aufweist, der die Montagebrücke (7) entlang der Führungsschienen (19) antreibt, insbesondere wobei der motorische Antrieb (23) ein Reibrad (24) aufweist.

8. Fertigungsanlage (1) nach einem der vorangehenden Ansprüche, dass die Montagebrücke (7) wenigstens eine Führung (14), vorzugsweise Teleskopführung, aufweist, die die Montageplattform (15) beim Heben und Senken stabilisiert und/oder dass der motorische Antrieb zum Heben und Senken der Montageplattform (15) einen Seil- oder Kettenantrieb aufweist.

9. Fertigungsanlage (1) nach einem der vorangehenden Ansprüche, dass die Montagebrücke (7) einen Abstandssensor aufweist, mit dem ein Abstand zwischen der Montagebrücke (7) und einem Produkt (2) bestimmbar ist, wodurch eine synchrone Bewegung der Montagebrücke (7) zu dem Produkt (2) erzielbar ist.

10. Fertigungsanlage (1) nach einem der vorangehenden Ansprüche, dass die Fertigungsanlage (1) wenigstens zwei separat steuerbare Montagebrücken (7) aufweist.
